# EUROPEAN PATENT APPLICATION

(11) **EP 3 985 182 A1**
(43) Date of publication of application: **20.04.2022**
(21) Application number: 20846449.5
(22) Date of filing: 22.06.2020
(51) Int. Cl.: E02F 9/26, G01B 11/00, G01B 11/26, H04N 7/18

(54) **POSITION IDENTIFICATION SYSTEM FOR CONSTRUCTION MACHINERY**

(30) Priority: 29.07.2019 JP 2019138432
(71) Applicant: KOBELCO CONSTRUCTION MACHINERY CO., LTD., Hiroshima-shi Hiroshima 731-5161 (JP)
(72) Inventor: HOSO, Yukihiro, Saeki-ku, Hiroshima-shi Hiroshima 731-5161 (JP); FUJIWARA, Sho, Saeki-ku, Hiroshima-shi Hiroshima 731-5161 (JP); KYU, Shingun, Saeki-ku, Hiroshima-shi Hiroshima 731-5161 (JP); YOSHIHARA, Hideki, Saeki-ku, Hiroshima-shi Hiroshima 731-5161 (JP)
(74) Representative: TBK
(86) International application number: PCT/JP2020/024279
(87) International publication number: WO 2021/019948

(57) **Abstract**

A position specifying system includes: a detection unit (20) detecting a parameter for specifying a posture of a specification target construction machine; a posture information generation unit (32) generating posture information regarding a posture of the specification target construction machine based on the parameter; an image-capturing device (40) acquiring an image including a plurality of construction machines at a work site; a posture estimation unit (52) estimating a posture of each of the plurality of construction machines based on the image and generating posture estimation information regarding the posture having been estimated; a machine specifying unit (61) specifying a construction machine corresponding to the posture information from among the plurality of construction machines by comparing the posture information with the posture estimation information; and an information output unit (62) generating, based on the image, and outputting position information regarding a position of the construction machine having been specified.

## Description

### Technical Field

The present invention relates to a position specifying system for specifying a position of a construction machine arranged at a work site.

### Background Art

As a technique for specifying a position of a construction machine, for example, as an excavator of Patent Literature 1, a technique of attaching a positioning device to an upper slewing body is known. The positioning device of Patent Literature 1 is a GNSS receiver that measures the latitude, longitude, and altitude of the position where the excavator is located, and measures the orientation of the excavator (paragraph 0011 of Patent Literature 1).

However, in a case where the construction machine does not include the positioning device, i.e., a receiver for using a satellite positioning system, the positioning device needs to be separately attached to the construction machine. The receiver cannot be used in an environment with many shields, specifically, a work site where radio waves of the satellite positioning system are hard to reach, such as under a structure, indoors, underground, or in a tunnel.

Other means for specifying the position of a construction machine at the work site include, for example, a method of performing image processing on an image of the work site acquired by a camera. However, when a plurality of construction machines simultaneously perform work at a work site, since the plurality of construction machines are included in the image acquired by the camera, the position of a construction machine as a specification target cannot be sometimes accurately specified from among the plurality of construction machines only by performing image processing on the image.

### Citation List

### Patent Literature

Patent Literature 1: JP 2018-159268 A

### Summary of Invention

The present invention has been made to solve the above problem, and an object thereof is to provide a position specifying system capable of accurately specifying a position of a construction machine as a specification target from among a plurality of construction machines arranged at a work site even in a case where the construction machine does not include a receiver for using a satellite positioning system or a case where work is performed at a work site where radio waves of the satellite positioning system are hard to reach.

A position specifying system according to one aspect of the present invention is a position specifying system for specifying a position of a construction machine arranged at a work site. The position specifying system includes: a detection unit provided in at least one specification target construction machine that is a target for specifying a position in the work site among a plurality of construction machines arranged at the work site, the detection unit detecting a parameter for specifying a posture of the specification target construction machine; a posture information generation unit that generates posture information regarding a posture of the specification target construction machine based on the parameter; an image-capturing device that acquires an image including the plurality of construction machines at the work site; a posture estimation unit that estimates a posture of each of the plurality of construction machines based on the image and generates, for each of the plurality of construction machines, posture estimation information regarding the posture having been estimated; a machine specifying unit that specifies a construction machine corresponding to the posture information from among the plurality of construction machines included in the image by comparing the posture information with the posture estimation information generated for each of the plurality of construction machines; and an information output unit that generates, based on the image, position information regarding a position of the construction machine specified by the machine specifying unit, and outputs the position information having been generated.

### Brief Description of Drawings

FIG. 1 is a schematic view illustrating an example of a work site to which a position specifying system according to an embodiment of the present invention is applied.
FIG. 2 is a side view illustrating an example of a construction machine that is a specification target in the position specifying system.
FIG. 3 is a block diagram illustrating a configuration of the position specifying system.
FIG. 4 is a view for explaining processing of estimating a posture of the construction machine in the position specifying system.
FIG. 5 is a view illustrating an example of a plurality of feature points in the construction machine.
FIG. 6 is a view illustrating a result of extracting the plurality of feature points for each of a plurality of construction machines arranged at the work site.
FIG. 7 is a table presenting an example of posture information and posture estimation information received by a server side communication unit of a server in the position specifying system.
FIG. 8 is a view illustrating an example of an image of a work site and position information that are displayed on a display device in the position specifying system.
FIG. 9 is a flowchart presenting calculation processing of a machine controller of the position specifying system.
FIG. 10 is a flowchart presenting calculation processing of a camera controller of the position specifying system.
FIG. 11 is a flowchart presenting calculation processing of a server of the position specifying system.

### Description of Embodiments

An embodiment of the present invention will be described below with reference to the drawings. Note that the following embodiment is merely an example embodying the present invention and does not limit the technical scope of the present invention.

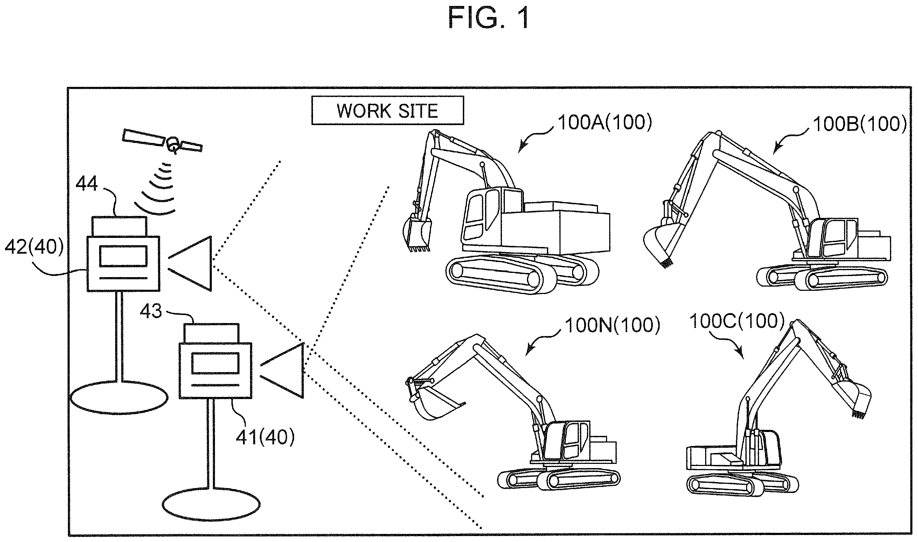

FIG. 1 is a schematic view illustrating an example of a work site to which the position specifying system according to the embodiment is applied. The position specifying system is for specifying a position of at least one specification target construction machine 100, which is a target for specifying a position at the work site, among a plurality of construction machines 100 arranged at the work site.

In the position specifying system according to the present embodiment, all of the plurality of construction machines 100 (n construction machines 100) arranged at the work site are set as targets for specifying positions at the work site. In other words, all of the plurality of construction machines 100 (n construction machines 100) are the specification target construction machines 100.

In FIG. 1, among the n specification target construction machines 100, a first construction machine 100A, a second construction machine 100B, a third construction machine 100C, and an n-th construction machine 100N are illustrated. Hereinafter, each of the n specification target construction machines 100 may be simply referred to as the construction machine 100. In the present embodiment, each of the n construction machines 100A to 100N is a hydraulic excavator, but in the present invention, the specification target construction machine is not limited to a hydraulic excavator, and may be another type of construction machine other than the hydraulic excavator.

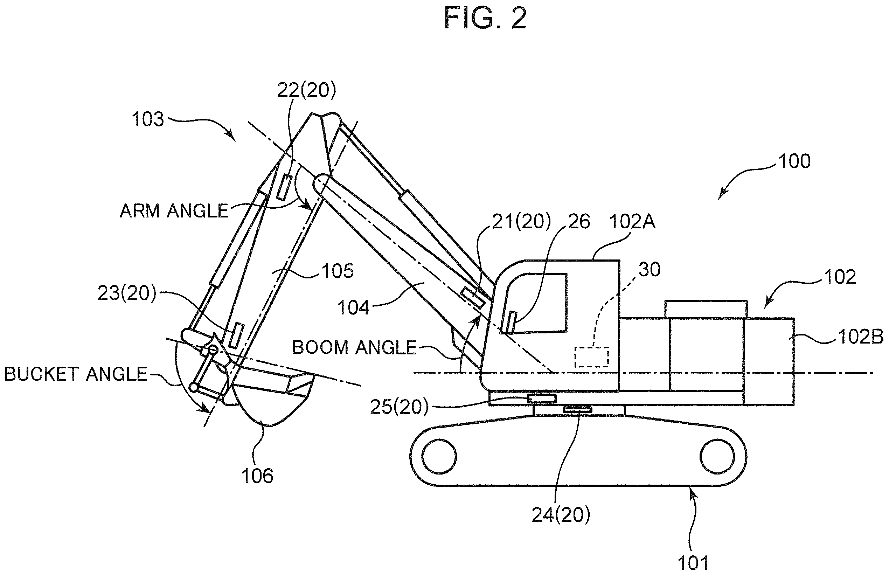

FIG. 2 is a side view illustrating the construction machine 100 (hydraulic excavator) that is a specification target in the position specifying system. As illustrated in FIG. 2, the construction machine 100 includes a crawler type lower travelling body 101, an upper slewing body 102 mounted on the lower travelling body 101 so as to be slewable about a slewing center axis perpendicular to a travelling surface thereof, and an attachment 103 mounted on the upper slewing body 102.

The upper slewing body 102 includes a cab 102A constituting a main body front portion, which is a front portion of the machine body, and a counterweight 102B constituting a main body rear portion, which is a rear portion of the machine body. The attachment 103 includes a boom 104 supported by the upper slewing body 102 in a hoisting manner, an arm 105 rotatably coupled to a tip end of the boom 104, and a tip end attachment 106 rotatably coupled to a tip end of the arm 105. In the present embodiment, the tip end attachment 106 is a bucket 106.

The construction machine 100 includes a boom cylinder 107 that operates to cause the boom 104 to perform a hoisting operation with respect to the upper slewing body 102, an arm cylinder 108 that operates to cause the arm 105 to perform a rotating operation with respect to the boom 104, and a tip end attachment cylinder 109 (bucket cylinder 109) that operates to cause the tip end attachment 106 (bucket 106) to perform a rotating operation with respect to the arm 105. The construction machine 100 further includes a display device 26 provided in the cab 102A. The display device 26 displays information output from an information output unit 62 of a server 60 described later.

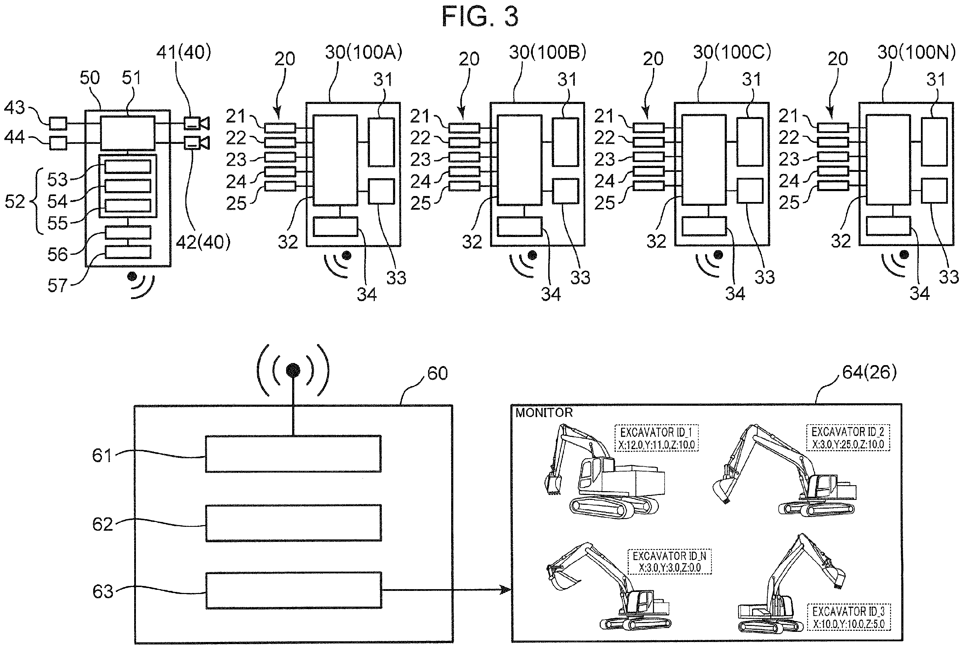

FIG. 3 is a block diagram illustrating the configuration of the position specifying system. As illustrated in FIG. 3, the position specifying system includes a plurality of detection units 20, a plurality of machine controllers 30, an image-capturing device 40, a camera controller 50, and the server 60. The plurality of machine controllers 30, the camera controller 50, and the server 60 each includes, for example, a computer including a processor such as a CPU and a memory.

The plurality of detection units 20 are provided in each of the specification target construction machines 100A to 100N. Each of the plurality of detection units 20 detects a parameter (posture parameter) for specifying the posture of the corresponding specification target construction machine 100. A detection result (detection signal) by each of the plurality of detection units 20 is input to the corresponding machine controller 30.

As illustrated in FIGS. 2 and 3, each of the plurality of detection units 20 includes a boom angle sensor 21, an arm angle sensor 22, a bucket angle sensor 23, a slewing angle sensor 24, and a vehicle body inclination angle sensor 25. Therefore, the parameter includes a detection value detected by each of these sensors 21 to 25. A specific explanation is as follows.

As illustrated in FIG. 2, the boom angle sensor 21 is a sensor that detects a parameter for specifying a boom angle, which is an angle of the boom 104 with respect to the upper slewing body 102. The boom angle is, for example, an angle formed by a plane orthogonal to a slewing center of the upper slewing body 102 and a straight line extending along a longitudinal direction of the boom 104. The straight line extending along the longitudinal direction of the boom 104 is, for example, a straight line connecting a rotation center (center of a coupling pin) of a coupling portion between the upper slewing body 102 and a base end portion of the boom 104 and a rotation center (center of a coupling pin) of a coupling portion between the tip end portion of the boom 104 and the base end portion of the arm 105.

The arm angle sensor 22 is a sensor that detects a parameter for specifying an arm angle, which is an angle of the arm 105 with respect to the boom 104. The arm angle is, for example, an angle formed by the straight line extending along the longitudinal direction of the boom 104 and a straight line extending along the longitudinal direction of the arm 105. The straight line extending along the longitudinal direction of the arm 105 is, for example, a straight line connecting a rotation center (center of a coupling pin) of the coupling portion between the tip end portion of the boom 104 and the base end portion of the arm 105 and a rotation center (center of a coupling pin) of a coupling portion between the tip end portion of the arm 105 and the base end portion of the bucket 106.

The bucket angle sensor 23 is a sensor that detects a parameter for specifying a bucket angle, which is an angle of the bucket 106 with respect to the arm 105. The bucket angle is, for example, an angle formed by the straight line extending along the longitudinal direction of the arm 105 and a preset straight line defining the direction of the bucket 106. The straight line that defines the direction of the bucket 106 is, for example, a straight line connecting a rotation center (center of a coupling pin) of the coupling portion between the tip end portion of the arm 105 and the base end portion of the bucket and a tip end portion of the bucket (e.g., a toe portion of the bucket).

The boom angle sensor 21, the arm angle sensor 22, and the bucket angle sensor 23 may include, for example, an inclination angle sensor (e.g., acceleration sensor) that detects an inclination angle of the boom 104, an inclination angle of the arm 105, and an inclination angle of the bucket 106, respectively. The boom angle sensor 21, the arm angle sensor 22, and the bucket angle sensor 23 may include, for example, a rotation angle sensor that detects a rotation angle of a coupling portion (coupling pin) between the upper slewing body 102 and the base end portion of the boom 104, a rotation angle of the coupling portion (coupling pin) between the tip end portion of the boom 104 and the base end portion of the arm 105, and a rotation angle of the coupling portion (coupling pin) between the tip end portion of the arm 105 and the base end portion of the bucket, respectively. The boom angle sensor 21, the arm angle sensor 22, and the bucket angle sensor 23 may include, for example, a stroke sensor that detects a stroke amount of the boom cylinder 107, a stroke amount of the arm cylinder 108, and a stroke amount of the bucket cylinder 109, respectively.

The slewing angle sensor 24 is a sensor that detects a parameter for specifying a slewing angle, which is an angle of the upper slewing body 102 with respect to the lower travelling body 101. The slewing angle is defined with reference to, for example, a position (phase) where an advancing direction of the lower travelling body 101 coincides with a front of the upper slewing body 102 (direction in which the attachment 103 extends). Examples of the slewing angle sensor 24 include a gyro sensor and a rotary encoder.

The vehicle body inclination angle sensor 25 is a sensor that detects a parameter for specifying a vehicle body inclination angle, which is an angle of the lower travelling body 101 or the upper slewing body 102 with respect to a horizontal plane. Examples of the vehicle body inclination angle sensor 25 include a two-axis inclination sensor (acceleration sensor) that can acquire an inclination angle about an X axis of the lower travelling body 101 or the upper slewing body 102 and an inclination angle about a Y axis of the lower travelling body 101 or the upper slewing body 102. The X axis and the Y axis are horizontal axes orthogonal to each other.

Each of the boom angle sensor 21, the arm angle sensor 22, the bucket angle sensor 23, the slewing angle sensor 24, and the vehicle body inclination angle sensor 25 periodically detects a corresponding parameter at predetermined time intervals, and a detected detection result (detection signal) is sequentially input to the machine controller 30. The detection timing of the angle sensor 21 to 25 is preferably synchronized.

Each of the plurality of machine controllers 30 includes a control unit 31, a posture information generation unit 32, a time stamp processing unit 33, and a machine side communication unit 34. The control unit 31 controls the overall operation of the corresponding construction machine 100.

The posture information generation unit 32 generates posture information regarding the posture of the construction machine 100 based on the detection result (the parameter) input from the corresponding detection unit 20. Specifically, the posture information generation unit 32 calculates the boom angle, the arm angle, the bucket angle, the slewing angle, and the vehicle body inclination angle based on the detection results input from the boom angle sensor 21, the arm angle sensor 22, the bucket angle sensor 23, the slewing angle sensor 24, and the vehicle body inclination angle sensor 25, respectively.

The time stamp processing unit 33 gives the posture information time information corresponding to the time when the posture information is generated. Specifically, the time stamp processing unit 33 stores, in association with the boom angle (posture information) having been calculated, the time when the detection result by the boom angle sensor 21 is input to the machine controller 30 or the time when the boom angle is calculated by the posture information generation unit 32, for example. Similarly, the time stamp processing unit 33 stores, in association with a calculated angle (posture information), time when the detection result by each of the arm angle sensor 22, the bucket angle sensor 23, the slewing angle sensor 24, and the vehicle body inclination angle sensor 25 is input to the machine controller 30 or the time when each of the arm angle, the bucket angle, the slewing angle, and the vehicle body inclination angle is calculated by the posture information generation unit 32.

The machine side communication unit 34 is connected so as to be able to transmit and receive data to and from the server 60 (specifically, a server side communication unit 63 described later) via a network. The machine side communication unit 34 transmits the posture information, the time information given to the posture information, and identification information for identifying the corresponding specification target construction machine 100 in association with one another. The posture information, the time information, and the identification information that have been transmitted are input to the server 60.

The identification information only needs to function as an identifier (ID) for the server 60 to uniquely identify the construction machine, and a specific aspect is not particularly limited. A unique identifier (ID) is set in advance for each of the plurality of construction machines 100 (n construction machines 100), and each of the plurality of machine controllers 30 stores its own identifier (ID).

The network may include, for example, a long distance information communication network such as the Internet and a mobile phone communication network. The network may include, for example, a communication network that enables the machine side communication unit 34 and the server side communication unit to wirelessly communicate at a distance of about several tens of meters to several hundreds of meters, such as specified low power radio, Bluetooth (registered trademark), and wireless local area network (wireless LAN). The network may be, for example, a wired communication network.

The image-capturing device 40 acquires an image including the plurality of construction machines 100 at the work site. The image-capturing device 40 includes a stereo camera including a first camera 41 and a second camera 42. Each of the first camera 41 and the second camera 42 of the image-capturing device 40 has a field of view enabling an image including the n construction machines 100A to 100N at the work site to be acquired. The image-capturing device 40 periodically captures the image at predetermined time intervals. The first camera 41 and the second camera 42 are synchronized. The image captured by the image-capturing device 40 is sequentially input to the camera controller 50. That is, a first image captured by the first camera 41 and a second image captured by the second camera 42 are sequentially input to the camera controller 50.

As illustrated in FIGS. 1 and 3, the position specifying system according to the present embodiment further includes positioning devices 43 and 44 for specifying positions of the first camera 41 and the second camera 42, respectively. Each of these positioning devices 43 and 44 includes a receiver for using a satellite positioning system. However, these positioning devices 43 and 44 are not essential but can be omitted.

Each of the positioning devices 43 and 44 includes, for example, a global positioning system (GPS) sensor that can receive data regarding the GPS and a global navigation satellite system (GNSS) sensor that can receive data regarding the GNSS, and receives positioning data (GPS data, GNSS data, and the like) of the satellite positioning system. The positioning devices 43 and 44 are attached to the first and second cameras 41 and 42, respectively, for example.

The camera controller 50 includes a camera position coordinate calculation unit 51, a posture estimation unit 52, a time stamp processing unit 56, and a camera side communication unit 57.

The camera position coordinate calculation unit 51 calculates coordinates of the first and second cameras 41 and 42 in the world coordinate system based on the positioning data to be input from the positioning devices 43 and 44, respectively.

The posture estimation unit 52 estimates the posture of each of the plurality of construction machines 100 based on the image to be input from the image-capturing device 40, and generates, for each of the plurality of construction machines 100, posture estimation information regarding the posture having been estimated. In the present embodiment, the posture estimation information includes a posture of the boom 104, a posture of the arm 105, a posture of the bucket 106, a posture of the upper slewing body 102 with respect to the lower travelling body 101, and a posture of the lower travelling body 101 or the upper slewing body 102 with respect to a horizontal plane. More specifically, the posture estimation information includes the boom angle (boom estimation angle), the arm angle (arm estimation angle), the bucket angle (bucket estimation angle), the slewing angle (slewing estimation angle), and the vehicle body inclination angle (vehicle body inclination estimation angle). Hereinafter, the posture estimation unit 52 will be specifically described.

In the present embodiment, the posture estimation unit 52 includes an estimation processing unit 53, a feature point coordinate calculation unit 54, and an angle calculation unit 55.

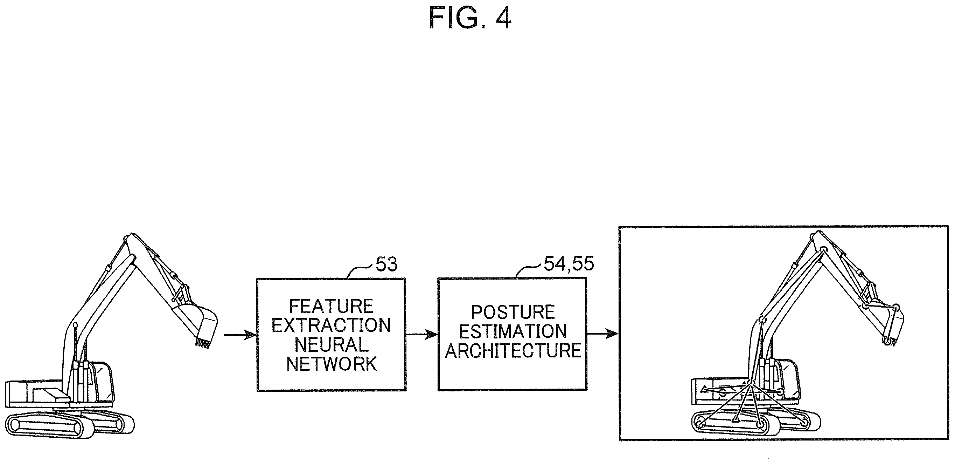

FIG. 4 is a view for explaining processing of estimating a posture of the construction machine 100 in the position specifying system. As illustrated in FIG. 4, by inputting the image acquired by the image-capturing device 40 to a neural network (e.g., convolutional neural network) having a multilayer structure machine-learned by deep learning, for example, the estimation processing unit 53 extracts a plurality of feature points for each of the plurality of construction machines 100 included in the image, and outputs the plurality of feature points having been extracted.

In the present embodiment, the image-capturing device 40 includes a stereo camera. Therefore, the estimation processing unit 53 extracts a plurality of feature points for each of the plurality of construction machines 100 included in a first image by inputting the first image acquired by the first camera 41 to the neural network, and outputs the plurality of feature points having been extracted. Similarly, the estimation processing unit 53 extracts a plurality of feature points for each of the plurality of construction machines 100 included in a second image by inputting the second image acquired by the second camera 42 to the neural network, and outputs the plurality of feature points having been extracted.

The neural network is a posture estimation algorithm learned in advance using data regarding a feature point of the construction machine 100. The neural network referred to by the estimation processing unit 53 learns by, for example, learning processing with training data indicating a correspondence relationship between an image of the construction machine 100 (hydraulic excavator) and the feature point in the image. Note that the estimation processing unit 53 may extract the plurality of feature points based on the image by using a technology such as Openpose (registered trademark), for example.

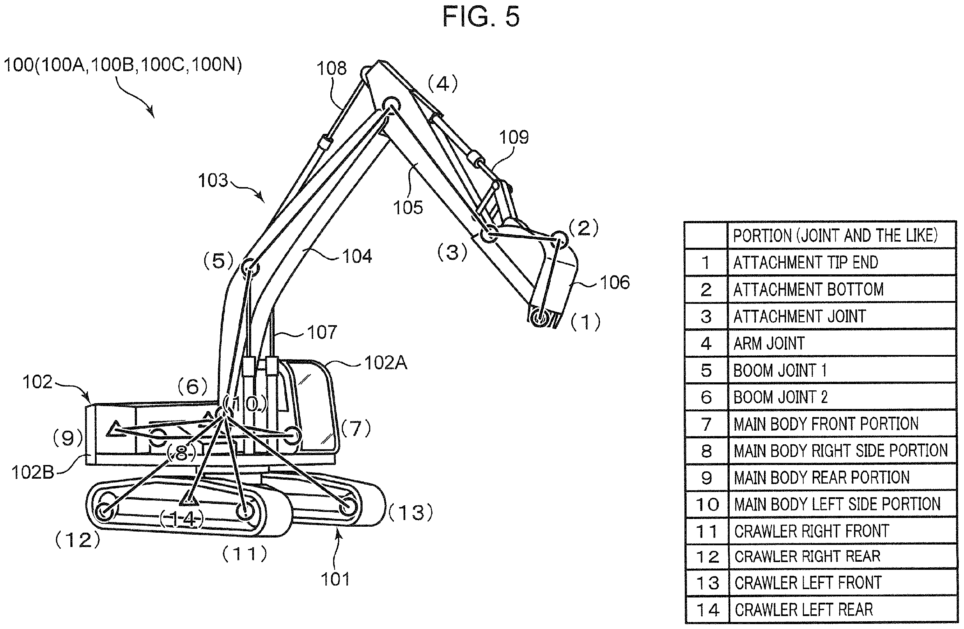

FIG. 5 illustrates an example of a plurality of feature points of the construction machine 100. In the neural network according to the present embodiment, a plurality of feature points of the construction machine 100 (hydraulic excavator) include an attachment tip end (1), an attachment bottom (2), an attachment joint (3), an arm joint (4), a boom joint 1 (5), a boom joint 2 (6), a main body front portion (7), a main body right side portion (8), a main body rear portion (9), a main body left side portion (10), a crawler right front (11), a crawler right rear (12), a crawler left front (13), and a crawler left rear (14). Note that the attachment tip end (1), the attachment bottom (2), and the attachment joint (3) indicate a tip end of the bucket 106, a bottom of the bucket 106, and a joint of the bucket 106, respectively. In FIG. 5, the main body left side portion (10) is not illustrated.

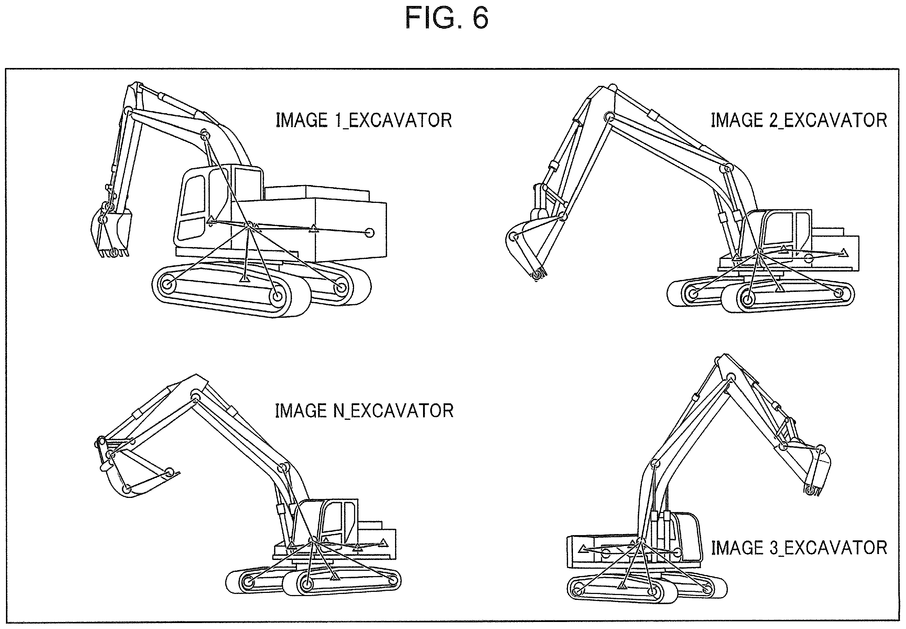

FIG. 6 is a view illustrating a result of extracting the plurality of feature points for each of a plurality of construction machines arranged at the work site. As illustrated in FIG. 6, the estimation processing unit 53 extracts a plurality of feature points for each of the plurality of construction machines 100 included in the image (e.g., the first image), and outputs the plurality of feature points having been extracted.

Based on a first image acquired by the first camera 41 and a second image acquired by the second camera 42, the feature point coordinate calculation unit 54 calculates coordinates of each of the plurality of feature points extracted by the estimation processing unit 53. That is, the feature point coordinate calculation unit 54 calculates, for each of the plurality of feature points, three-dimensional coordinates (coordinates in a camera coordinate system) of a feature point with reference to the image-capturing device 40 (stereo camera).

Specifically, parallax of the feature point in a pair of image data (the first image and the second image) captured by the first camera 41 and the second camera 42 and having different viewpoints is calculated, and three-dimensional position information of the feature point is generated based on the parallax. The three-dimensional position information is represented by, for example, coordinates in the camera coordinate system with a center point between the first camera 41 and the second camera 42 as an origin. The camera coordinate system is represented by, for example, a point (X, Y, Z) on a space in a case where an X axis is set in a horizontal direction connecting the first camera 41 and the second camera 42, a Y axis is set in a front-rear direction orthogonal to this X axis, and a Z axis is set in an up-down direction.

The angle calculation unit 55 calculates each of the boom angle, the arm angle, the bucket angle, the slewing angle, and the vehicle body inclination angle based on coordinates of the plurality of feature points calculated by the feature point coordinate calculation unit 54. As described above, the posture estimation unit 52 can generate posture estimation information regarding the posture of each of the plurality of construction machines based on the image input from the image-capturing device 40.

The time stamp processing unit 56 gives the posture estimation information time information corresponding to the time when the posture estimation information is generated. Specifically, the time stamp processing unit 56 stores, in association with the posture estimation information having been calculated, the time when the image by the image-capturing device 40 is input to the camera controller 50 or the time when the posture estimation unit 52 generates the posture estimation information, for example.

The camera side communication unit 57 is connected so as to be able to transmit and receive data to and from the server 60 (specifically, the server side communication unit 63 described later) via the network. Specifically, the camera side communication unit 57 transmits the posture estimation information and the time information given to the posture estimation information in association with each other. The posture estimation information and the time information that have been transmitted are input to the server 60.

The server 60 includes, for example, a computer used by an orderer who orders work at the work site, a manager who manages work at the work site, and the like, and a computer included in a remote operation device for remotely operating the construction machine.

The server 60 includes a machine specifying unit 61, an information output unit 62, a server side communication unit 63, and a display device 64. The server side communication unit 63 is connected to the machine side communication unit 34 of the machine controller 30 and the camera side communication unit 57 of the camera controller 50 via the network so as to be able to transmit and receive data.

By comparing the posture information and the posture estimation information received by the server side communication unit 63, the machine specifying unit 61 specifies a construction machine corresponding to the posture information among the plurality of construction machines 100 included in the image.

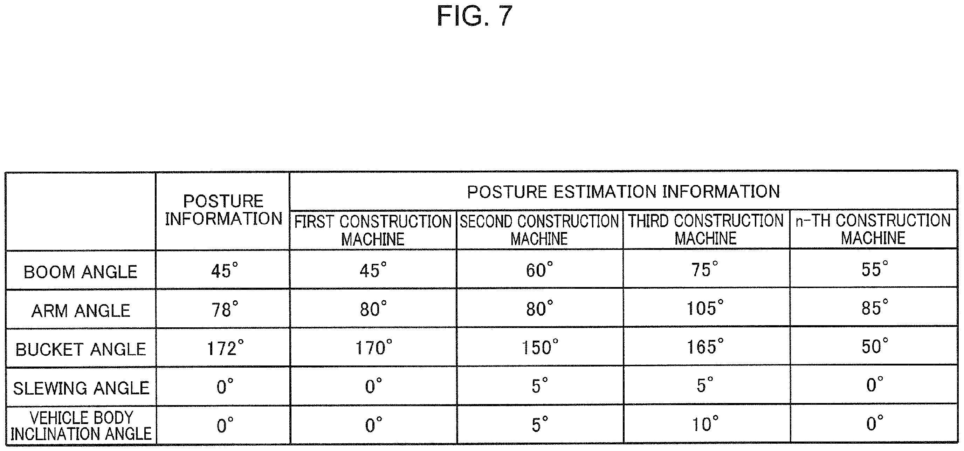

FIG. 7 is a table presenting an example of the posture information and the posture estimation information received by the server side communication unit 63. In the specific example illustrated in FIG. 7, the posture information received by the server side communication unit 63 is posture information transmitted from the machine controller 30 of the first construction machine 100. By performing the following calculation, for example, the machine specifying unit 61 specifies the first construction machine 100 corresponding to the posture information.

First, the machine specifying unit 61 calculates, for the boom angle, a difference between a value (45°) of the posture information and each value of the first to n-th construction machines 100 in the posture estimation information. Next, the machine specifying unit 61 ranks the first to n-th construction machines 100 in ascending order of the difference in the boom angle. Next, similarly to the boom angle, also for each of the arm angle, the bucket angle, the slewing angle, and the vehicle body inclination angle, the machine specifying unit 61 calculates a difference between a value of the posture information and each value of the posture estimation information, and ranks them in ascending order of the difference. Next, the machine specifying unit 61 calculates a total value of the ranks of the boom angle, the arm angle, the bucket angle, the slewing angle, and the vehicle body inclination angle for each construction machine 100. Then, the machine specifying unit 61 specifies the first construction machine 100A having the smallest total value as the construction machine corresponding to the posture information.

Note that also for the second to n-th construction machines, the machine specifying unit 61 compares each piece of posture information with the posture estimation information similarly to the above, and specifies each construction machine corresponding to each piece of posture information.

The information output unit 62 outputs position information regarding the position of the construction machine 100 specified by the machine specifying unit 61. In the present embodiment, the position information is coordinates in the three-dimensional coordinate system of the construction machine 100 specified by the machine specifying unit 61.

The coordinates of the construction machine 100 are, for example, coordinates of a reference position set in advance in the construction machine 100. The reference position is not particularly limited and can be arbitrarily set. The reference position may be set to, for example, a position corresponding to any feature point of the plurality of feature points. In this case, the reference position is preferably a position corresponding to any feature point included in the lower travelling body 101 or any feature point included in the upper slewing body 102 among the plurality of feature points. This is because the displacement of the lower travelling body 101 and the upper slewing body 102 is smaller than that of the attachment 103. In a case where the reference position is set to a position corresponding to any feature point of the plurality of feature points, the information output unit 62 outputs, as the position information, coordinates in a three-dimensional coordinate system of the position corresponding to the feature point.

The reference position may be set to a position other than the position corresponding to the feature point. In this case, the reference position may be set to any position on the slewing center axis of the upper slewing body 102, for example. In a case where the reference position is set to a position other than the position corresponding to the feature point, the information output unit 62 calculates, based on the image, coordinates of the reference position of each of the first to n-th construction machines 100 specified by the machine specifying unit 61, and outputs, as the position information, the calculated coordinates of each of the first to n-th construction machines 100 in the three-dimensional coordinate system.

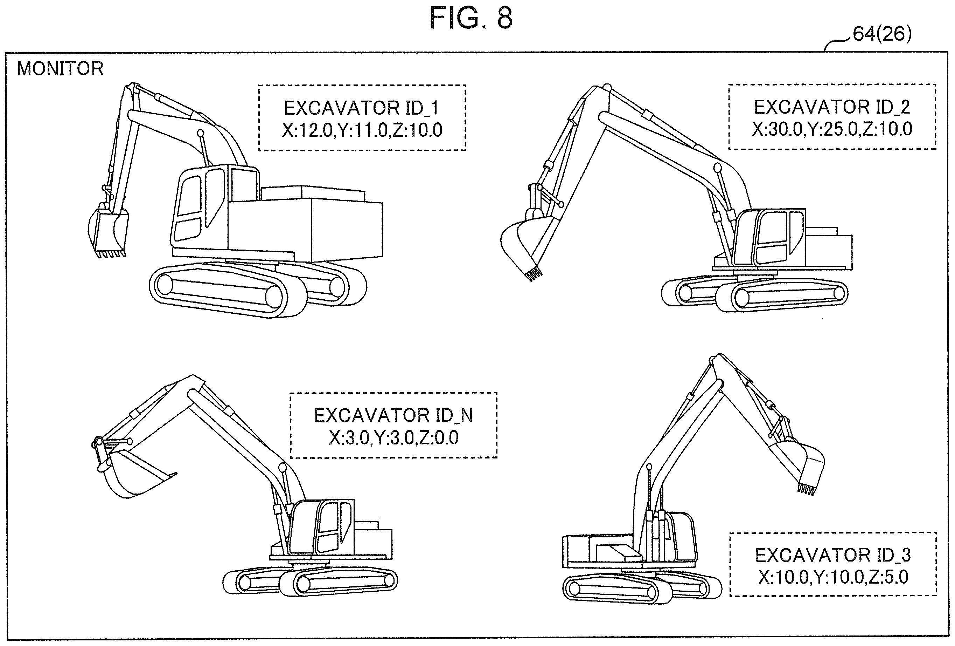

The display device 64 displays the position information output from the information output unit 62 together with an image of the work site. FIG. 8 is a view illustrating an example of an image of a work site and position information that are displayed on the display device 64 of the server 60 (or the display device 26 of the construction machine 100) in the position specifying system.

An image of the work site includes an image of each of the plurality of specification target construction machines 100A to 100N. Specifically, in FIG. 8, an upper left image is of the first specification target construction machine 100A, an upper right image is of the second specification target construction machine 100B, a lower right image is of the third specification target construction machine 100C, and a lower left image is of the n-th specification target construction machine 100N.

The information output unit 62 outputs, for example, the position information of the first specification target construction machine 100A and machine information indicating the first specification target construction machine in association with each other, and outputs the position information of the second specification target construction machine 100B and machine information indicating the second specification target construction machine 100B in association with each other. Due to this, the machine information and the position information are displayed on the display device 64 (26) in association with each other. For example, the machine information indicating the first specification target construction machine is specified based on first identification information for identifying the first specification target construction machine 100A, and is "excavator ID 1" in the specific example illustrated in FIG. 8.

The position information is represented by coordinates (X, Y, Z) in a three-dimensional coordinate system. The three-dimensional coordinate system may be the camera coordinate system or the world coordinate system. As described above, the camera position coordinate calculation unit 51 can calculate coordinates of the first and second cameras 41 and 42 in the world coordinate system based on the positioning data input from the positioning devices 43 and 44, respectively. Therefore, the coordinates in the camera coordinate system calculated by the feature point coordinate calculation unit 54 can be converted into coordinates in the world coordinate system.

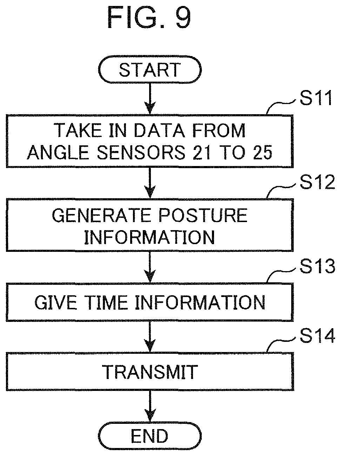

Next, an operation of the position specifying system in the present embodiment will be described. FIG. 9 is a flowchart presenting calculation processing of the machine controller 30 of the position specifying system. The calculation processing illustrated in FIG. 9 is performed by the machine controller 30 of each of the plurality of specification target construction machines 100A to 100N.

First, the posture information generation unit 32 of the machine controller 30 acquires a detection result (parameter) detected by each of the angle sensors 21 to 25 constituting the detection unit 20 (step S11).

Next, the posture information generation unit 32 generates the posture information based on the parameter having been acquired (step S12). Specifically, the posture information generation unit 32 calculates the boom angle, the arm angle, the bucket angle, the slewing angle, and the vehicle body inclination angle based on the detection result (parameter) acquired from the angle sensors 21 to 25, respectively.

Next, the time stamp processing unit 33 gives the posture information time information corresponding to the time when the posture information is generated (step S13). Specifically, the time stamp processing unit 33 stores each of the boom angle, the arm angle, the bucket angle, the slewing angle, and the vehicle body inclination angle in association with the time information.

Next, the machine side communication unit 34 transmits the posture information, the time information given to the posture information, and identification information for identifying the corresponding specification target construction machine 100 in association with one another (step S14).

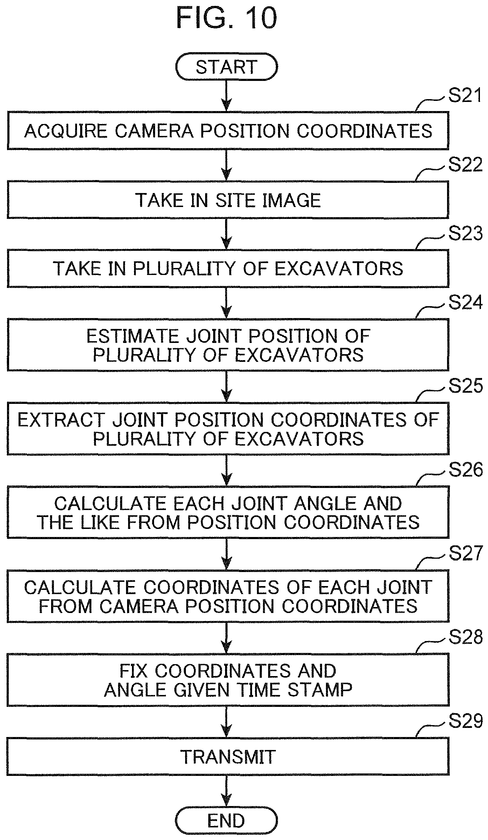

FIG. 10 is a flowchart presenting calculation processing of the camera controller 50 of the position specifying system.

First, the camera position coordinate calculation unit 51 of the camera controller 50 acquires the positioning data from the positioning devices 43 and 44, and calculates coordinates of the first and second cameras 41 and 42 in the world coordinate system based on the positioning data (step S21).

Next, the posture estimation unit 52 acquires a first image and a second image from the first camera 41 and the second camera 42 of the image-capturing device 40, respectively (step S22).

Next, by performing image processing on images of the plurality of construction machines 100 included in the first image having been acquired, the posture estimation unit 52 individually recognizes the image of the first construction machine 100A, the image of the second construction machine 100B, the image of the third construction machine 100C, and the image of the n-th construction machine 100N, and individually takes in the images of the respective construction machines (step S23). Similarly, by performing image processing on images of the plurality of construction machines 100 included in the second image having been acquired, the posture estimation unit 52 individually recognizes the images of the first to n-th construction machines 100A to 100N, and individually takes in the images of the respective construction machines (step S23).

Next, by inputting the image of each construction machine individually taken in in step S23 to the neural network, the estimation processing unit 53 of the posture estimation unit 52 extracts a plurality of feature points (plurality of joint positions) for the image of the construction machine 100 and outputs the plurality of feature points having been extracted (step S24).

Next, the feature point coordinate calculation unit 54 of the posture estimation unit 52 calculates coordinates of each of the plurality of feature points extracted by the estimation processing unit 53 (step S25). That is, the feature point coordinate calculation unit 54 calculates, for each of the plurality of feature points, three-dimensional coordinates (coordinates in a camera coordinate system) of a feature point with reference to the image-capturing device 40 (stereo camera).

Next, the angle calculation unit 55 of the posture estimation unit 52 calculates each of the boom angle, the arm angle, the bucket angle, the slewing angle, and the vehicle body inclination angle based on coordinates of the plurality of feature points calculated by the feature point coordinate calculation unit 54 (step S26). Due to this, the posture estimation unit 52 generates posture estimation information regarding a posture of each of the plurality of construction machines based on the image input from the image-capturing device 40.

Next, the posture estimation unit 52 performs calculation to convert coordinates of the plurality of feature points in the camera coordinate system into coordinates in a world coordinate system (step S27).

Next, the time stamp processing unit 56 gives the posture estimation information time information corresponding to the time when the posture estimation information is generated (step S28). Specifically, the time stamp processing unit 56 stores each of the boom angle, the arm angle, the bucket angle, the slewing angle, and the vehicle body inclination angle that constitute the posture estimation information in association with the time information.

Next, the camera side communication unit 57 transmits the posture estimation information and the time information given to the posture estimation information in association with each other (step S29).

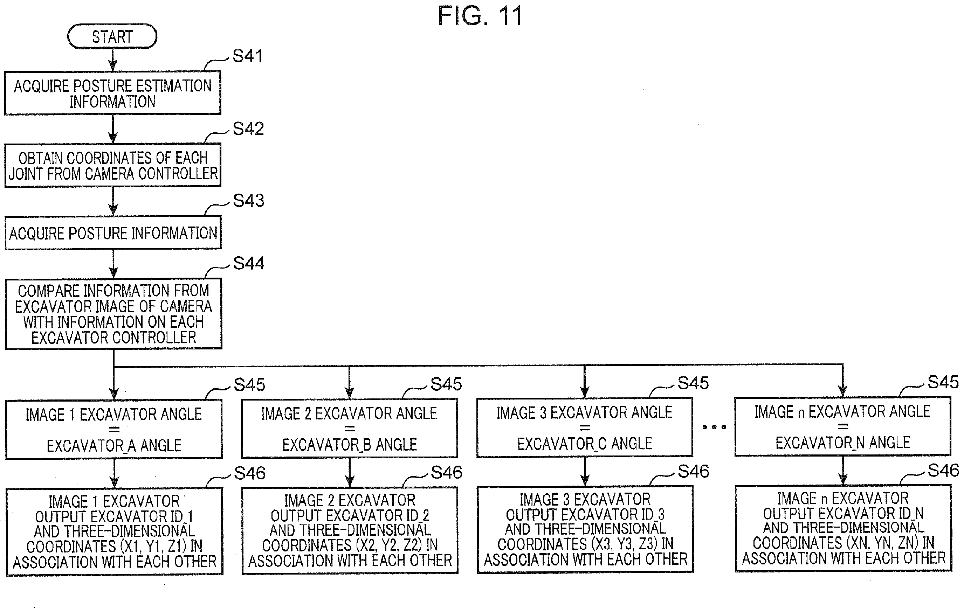

FIG. 11 is a flowchart presenting calculation processing of the server 60 of the position specifying system.

First, the server 60 acquires the posture estimation information having been given the time information and transmitted from the camera controller 50 (step S41).

Next, the server 60 acquires data of coordinates of the plurality of feature points in the world coordinate system calculated in step S27 of FIG. 10 (step S42).

Next, the server 60 acquires the posture information having been given the time information and transmitted from the machine controller 30 (step S43).

Next, the machine specifying unit 61 of the server 60 compares the posture information and posture estimation information that have been acquired (step S44), and specifies the construction machine corresponding to the posture information among the plurality of construction machines 100 included in the image (step S45). The processing in steps S44 and S45 described above is performed for posture information of each of the plurality of specification target construction machines 100A to 100N.

Next, the information output unit 62 of the server 60 outputs position information regarding the position of the construction machine 100 specified by the machine specifying unit 61 and the machine information in association with each other (step S46). The position information and the output machine information that have been output are displayed on the display device 64 (26) in a state of being associated with each other as illustrated in FIG. 8, for example.

### [Modifications]

The present invention is not limited to the embodiment described above. The present invention can include the following aspects, for example.

### (A) Regarding operation status information

The position specifying system may further include an operation status generation unit. The operation status generation unit is provided in the server 60, for example. The operation status generation unit generates operation status information regarding operation statuses of the plurality of construction machines 100 based on time-series change in the image acquired by the image-capturing device 40. At least one of the display device 26 and the display device 64 displays the operation status information generated by the operation status generation unit. The operation status information is preferably displayed on the display device 26 of each of the plurality of construction machines 100 arranged at the work site.

The operation status information may include at least one of the position information, the posture information, the posture estimation information, and information on a work content of the construction machine 100. The work content of the construction machine 100 is determined based on, for example, the posture information in time series or the posture estimation information in time series. The operation status information may include at least one of the position information in time series, the posture information in time series, the posture estimation information in time series, and information on the work content in time series.

The operation status generation unit may include, for example, an operation prediction unit. The operation prediction unit predicts operations of the plurality of construction machines based on a time-series change in the images. At least one of the display device 26 and the display device 64 displays prediction information of the operations of the plurality of construction machines predicted by the operation prediction unit. The prediction information is preferably displayed on the display device 26 of each of the plurality of construction machines 100.

The operation prediction unit may generate posture information in time series (or posture estimation information in time series) of the construction machine 100 corresponding to the identification information based on the posture information (or the posture estimation information), the time information given to the posture information (or the posture estimation information), and the identification information, for example, and predict the operation of the construction machine 100 after a predetermined time based on the posture information in time series (or posture estimation information in time series). The operation prediction unit may predict the operation of the construction machine 100 based on a time-series change in coordinates of any feature point of the plurality of feature points, for example. Specifically, the operation prediction unit may calculate speed and acceleration of an operation of the feature point based on time-series change in the coordinates, for example, and predict the position of the feature point after a predetermined time based on these speed and acceleration. The operation prediction unit may predict operations of the plurality of construction machines based on time-series change in the image using a neural network machine-learned in advance.

### (B) Regarding image-capturing device

In the above embodiment, the image-capturing device 40 is a stereo camera including the first camera 41 and the second camera 42, but the present invention is not limited thereto. In the present invention, the image-capturing device may include a single camera or may include a distance camera. The image-capturing device may include a plurality of cameras of three or more.

### (C) Regarding server

In the above embodiment, the position specifying system includes a plurality of machine controllers 30, the camera controller 50, and the server 60, but the present invention is not limited thereto. In the present invention, the function of the server 60 may be included in the camera controller 50, for example, and in this case, the server 60 can be omitted. In the present invention, the function of the camera controller 50 may be included in the server 60, and in this case, the camera controller 50 can be omitted.

### (D) Regarding construction machine

The tip end attachment is not limited to the bucket, and may be another tip end attachment such as a grapple, a crusher, a breaker, and a fork. The construction machine is not limited to the hydraulic excavator, and may be another construction machine. In the above embodiment, the construction machine includes the lower travelling body 101 that can travel, but the present invention is not limited thereto. In the present invention, the construction machine may have a structure in which the upper slewing body 102 is supported by a base installed at a specific place.

### (E) Regarding posture information and posture estimation information

In the above embodiment, the posture information includes the boom angle, the arm angle, the bucket angle, the slewing angle, and the vehicle body inclination angle, and the posture estimation information includes the boom angle (boom estimation angle), the arm angle (arm estimation angle), the bucket angle (bucket estimation angle), the slewing angle (slewing estimation angle), and the vehicle body inclination angle (vehicle body inclination estimation angle), but the present invention is not limited thereto. In the present invention, the posture information may be at least one of the boom angle, the arm angle, the bucket angle, the slewing angle, and the vehicle body inclination angle, and the posture estimation information may be at least one of the boom angle, the arm angle, the bucket angle, the slewing angle, and the vehicle body inclination angle.

### (F) Regarding estimation of posture of construction machine based on image

In the embodiment, estimation of the posture of the construction machine 100 based on the image by the posture estimation unit 52 is performed using a neural network (posture estimation algorithm) machine-learned in advance, but the present invention is not limited thereto. In the present invention, estimation of the posture of the construction machine may be performed by another method other than the method using the neural network. Examples of the other method include a method using machine learning other than the method using the neural network, and time series algorithm.

### Features of the above-described embodiment are summarized as follows.

A position specifying system according to one aspect of the present invention is a position specifying system for specifying a position of a construction machine arranged at a work site, the position specifying system including: a detection unit provided in at least one specification target construction machine that is a target for specifying a position in the work site among a plurality of construction machines arranged at the work site, the detection unit detecting a parameter for specifying a posture of the specification target construction machine; a posture information generation unit that generates posture information regarding a posture of the specification target construction machine based on the parameter; an image-capturing device that acquires an image including the plurality of construction machines at the work site; a posture estimation unit that estimates a posture of each of the plurality of construction machines based on the image and generates, for each of the plurality of construction machines, posture estimation information regarding the posture having been estimated; a machine specifying unit that specifies a construction machine corresponding to the posture information from among the plurality of construction machines included in the image by comparing the posture information with the posture estimation information generated for each of the plurality of construction machines; and an information output unit that generates, based on the image, position information regarding a position of the construction machine specified by the machine specifying unit, and outputs the position information having been generated.

In this aspect, the posture information is generated based on the parameter actually detected by the detection unit, and the posture information having been generated is compared with the posture estimation information estimated based on the image, whereby the construction machine corresponding to the posture information, i.e., the specification target construction machine is specified. This makes it possible to increase the accuracy of specifying a specification target construction machine from the plurality of construction machines, as compared with a case where a construction machine is specified based only on the image, for example. Then, the position information regarding the position of the specification target construction machine having been specified is generated and output by the information output unit based on the image. The position information having been output may be displayed on a display device so that a work-related person can view, for example, and may be used as information for performing other processing. As described above, the present invention can accurately specify a position of the specification target construction machine from among a plurality of construction machines arranged at a work site even in a case where the specification target construction machine does not include a receiver for using a satellite positioning system or a case where work is performed at a work site where radio waves of the satellite positioning system are hard to reach.

In the above aspect, preferably, the image-capturing device includes a stereo camera including a first camera and a second camera, the posture estimation unit generates the posture estimation information regarding the posture of each of the plurality of construction machines based on coordinates in a three-dimensional coordinate system by performing image processing on the image acquired by the stereo camera, and the information output unit outputs coordinates of the construction machine in the three-dimensional coordinate system as the position information of the construction machine specified by the machine specifying unit.

In this aspect, since the image-capturing device includes the stereo camera, the posture estimation unit can generate the posture estimation information based on coordinates in the three-dimensional coordinate system. This makes it possible to increase the estimation accuracy of the posture of each of the plurality of construction machines estimated by the posture estimation unit, as compared with a case where the posture estimation information is generated based on coordinates in a two-dimensional coordinate system, for example. The information output unit can output coordinates of the construction machine (i.e., the specification target construction machine) in the three-dimensional coordinate system as the position information. This enables work-related persons such as an orderer who orders work at the work site, a manager who manages work at the work site, and an operator who performs work at the work site to more accurately grasp the position of the specification target construction machine based on the position information having been output.

In the above aspect, preferably, the position specifying system further includes a time stamp processing unit that gives the posture information time information corresponding to a time when the posture information is generated, and gives the posture estimation information time information corresponding to a time when the posture estimation information is generated, in which the machine specifying unit specifies a construction machine corresponding to the posture information among the plurality of construction machines included in the image by comparing the posture information with the posture estimation information that have the time information corresponding to each other.

In this aspect, even in a case where the posture information is periodically generated at predetermined time intervals, for example, and the posture estimation information is periodically generated at predetermined time intervals, the machine specifying unit is enabled to compare corresponding information with each other based on the time information, and periodic specification of the specification target construction machine by the machine specifying unit is enabled to be performed with high accuracy.

In the above aspect, preferably, the position specifying system further includes a machine side communication unit that is provided in the at least one specification target construction machine and transmits the posture information and the time information given to the posture information in association with each other, and a server side communication unit that is provided in a server installed in a place away from the plurality of construction machines and connected to the machine side communication unit via a network, in which the machine specifying unit is provided in the server and compares the posture information received by the server side communication unit with the posture estimation information having the time information corresponding to the time information of the posture information.

In this aspect, even in a case where the server is disposed, for example, at a remote place away from the work site, the machine specifying unit is enabled to compare corresponding information based on the time information.

In the above aspect, the position specifying system may further include a camera side communication unit that transmits the posture estimation information and the time information given to the posture estimation information in association with each other, in which the server side communication unit is connected to the camera side communication unit via a network, and the machine specifying unit compares the posture information with posture estimation information having the time information corresponding to the time information of the posture information among the posture estimation information received by the server side communication unit.

In this aspect, even in a case where the image-capturing device, the posture estimation unit, and the server are disposed at places away from one another, the machine specifying unit is enabled to compare corresponding information based on the time information.

In the above aspect, the position specifying system may further include at least one display device that displays the position information output from the information output unit.

In this aspect, the work-related persons can grasp a position of the specification target construction machine based on the position information by viewing the position information displayed on the display device.

In the above aspect, the at least one display device may be provided in the at least one specification target construction machine.

In this aspect, the operator who operates the specification target construction machine can view the position information displayed on the display device provided in the specification target construction machine while performing drive operation of the specification target construction machine, and can grasp the position information thereof.

In the above aspect, the at least one specification target construction machine may include a first specification target construction machine and a second specification target construction machine, the machine side communication unit provided in the first specification target construction machine may be configured to transmit, in association with one another, the posture information of the first specification target construction machine, the time information given to the posture information, and first identification information for identifying the first specification target construction machine, the machine side communication unit provided in the second specification target construction machine may be configured to transmit, in association with one another, the posture information of the second specification target construction machine, the time information given to the posture information, and second identification information for identifying the second specification target construction machine, and the information output unit may output, in association with each other, the position information of the first specification target construction machine and machine information, which is information indicating the first specification target construction machine specified based on the first identification information, and the information output unit may output, in association with each other, the position information of the second specification target construction machine and machine information, which is information indicating the second specification target construction machine specified based on the second identification information.

In this aspect, it is possible to specify the position of each of the first specification target construction machine and the second specification target construction machine that have been set in advance among the plurality of construction machines arranged at the work site. In this aspect, since the position information of the first and the second specification target construction machines is displayed on the display device in association with machine information of the specification target construction machine, the work-related persons viewing the display device can easily grasp the position information of the specification target construction machine.

In the above aspect, the position specifying system may further include an operation status generation unit that generates operation status information regarding operation statuses of the plurality of construction machines based on time-series change in the image acquired by the image-capturing device, in which the at least one display device may display the operation status information generated by the operation status generation unit.

In this aspect, the work-related persons can grasp operation statuses of the plurality of construction machines at the work site based on the operation status information displayed on the display device.

In the above aspect, the operation status generation unit may include an operation prediction unit that predicts operations of the plurality of construction machines based on time-series change in the image, and the at least one display device may display prediction information of operations of the plurality of construction machines predicted by the operation prediction unit.

In this aspect, the work-related persons can take appropriate actions in accordance with a situation of a work site based on the prediction information displayed on the display device.

## Claims

1. A position specifying system for specifying a position of a construction machine arranged at a work site, the position specifying system comprising:
a detection unit provided in at least one specification target construction machine that is a target for specifying a position in the work site among a plurality of construction machines arranged at the work site, the detection unit detecting a parameter for specifying a posture of the specification target construction machine;
a posture information generation unit that generates posture information regarding a posture of the specification target construction machine based on the parameter;
an image-capturing device that acquires an image including the plurality of construction machines at the work site;
a posture estimation unit that estimates a posture of each of the plurality of construction machines based on the image and generates, for each of the plurality of construction machines, posture estimation information regarding the posture having been estimated;
a machine specifying unit that specifies a construction machine corresponding to the posture information from among the plurality of construction machines included in the image by comparing the posture information with the posture estimation information generated for each of the plurality of construction machines; and
an information output unit that generates, based on the image, position information regarding a position of the construction machine specified by the machine specifying unit, and outputs the position information having been generated.

2. The position specifying system according to claim 1, wherein
the image-capturing device includes a stereo camera including a first camera and a second camera,
the posture estimation unit generates the posture estimation information regarding a posture of each of the plurality of construction machines based on coordinates in a three-dimensional coordinate system by performing image processing on the image acquired by the stereo camera, and
the information output unit outputs coordinates of the construction machine in the three-dimensional coordinate system as the position information of the construction machine specified by the machine specifying unit.

3. The position specifying system according to claim 1 or 2, further comprising:
a time stamp processing unit that gives the posture information time information corresponding to a time when the posture information is generated, and gives the posture estimation information time information corresponding to a time when the posture estimation information is generated,
wherein
the machine specifying unit specifies a construction machine corresponding to the posture information among the plurality of construction machines included in the image by comparing the posture information with the posture estimation information that have the time information corresponding to each other.

4. The position specifying system according to claim 3, further comprising:
a machine side communication unit that is provided in the at least one specification target construction machine and transmits the posture information and the time information given to the posture information in association with each other; and
a server side communication unit that is provided in a server installed in a place away from the plurality of construction machines and connected to the machine side communication unit via a network,
wherein
the machine specifying unit is provided in the server and compares the posture information received by the server side communication unit with the posture estimation information having the time information corresponding to the time information of the posture information.

5. The position specifying system according to claim 4, further comprising:
a camera side communication unit that transmits the posture estimation information and the time information given to the posture estimation information in association with each other, wherein
the server side communication unit is connected to the camera side communication unit via a network, and the machine specifying unit compares the posture information with posture estimation information having the time information corresponding to the time information of the posture information among the posture estimation information received by the server side communication unit.

6. The position specifying system according to claim 4 or 5, further comprising:
at least one display device that displays the position information output from the information output unit.

7. The position specifying system according to claim 6, wherein
the at least one display device is provided in the at least one specification target construction machine.

8. The position specifying system according to claim 6 or 7, wherein
the at least one specification target construction machine includes a first specification target construction machine and a second specification target construction machine,
the machine side communication unit provided in the first specification target construction machine is configured to transmit, in association with one another, the posture information of the first specification target construction machine, the time information given to the posture information, and first identification information for identifying the first specification target construction machine,
the machine side communication unit provided in the second specification target construction machine is configured to transmit, in association with one another, the posture information of the second specification target construction machine, the time information given to the posture information, and second identification information for identifying the second specification target construction machine, and
the information output unit outputs, in association with each other, the position information of the first specification target construction machine and machine information indicating the first specification target construction machine specified based on the first identification information, and outputs, in association with each other, the position information of the second specification target construction machine and machine information indicating the second specification target construction machine specified based on the second identification information.

9. The position specifying system according to any one of claims 6 to 8, further comprising:
an operation status generation unit that generates operation status information regarding operation statuses of the plurality of construction machines based on time-series change in the image acquired by the image-capturing device,
wherein
the at least one display device displays the operation status information generated by the operation status generation unit.

10. The position specifying system according to claim 9, wherein
the operation status generation unit includes an operation prediction unit that predicts operations of the plurality of construction machines based on time-series change in the image, and
the at least one display device displays prediction information of operations of the plurality of construction machines predicted by the operation prediction unit.
